(19) Europäisches Patentamt
European Patent Office
Office européen des brevets

(11) **EP 1 850 027 A2**

(12) **EUROPÄISCHE PATENTANMELDUNG**

(43) Veröffentlichungstag:
**31.10.2007 Patentblatt 2007/44**

(51) Int Cl.:
***F16D 25/08*** *(2006.01)*

(21) Anmeldenummer: 07007986.8

(22) Anmeldetag: **19.04.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK YU**

(30) Priorität: **29.04.2006 DE 102006019975**

(71) Anmelder: **LuK Lamellen und Kupplungsbau Beteiligungs KG**
**77813 Bühl (DE)**

(72) Erfinder: **Hausner, Markus**
**76135 Karlsruhe (DE)**

(54) **Hydraulisches System**

(57) Die Erfindung betrifft ein hydraulisches System, insbesondere für Kraftfahrzeuge, umfassend einen Geberzylinder (4) mit einem Gehäuse und einem darin axial verlagerbaren und gegen dieses Gehäuse abgedichteten Ringkolben und einem Druckmittelauslass, sowie einem Nehmerzylinder (5) mit einem Gehäuse und einem darin axial verlagerbaren, gegen dieses Gehäuse abgedichteten Ringkolben und einem Druckmitteleinlass, sowie eine den Druckmitteleinlass und den Druckmittelauslass hydraulisch wirksam verbindende Druckmittelleitung, wobei diese Bauteile und deren Komponenten spezifische Einzelsteifigkeiten aufweisen, wird diese Gesamtsteifigkeit bzw. Basissteifigkeit $C_0$ des hydraulischen Systems erhöht durch die Verwendung von Kolben für Geberzylinder mit einer Fläche von 300mm² - 1000mm² und durch die Verwendung von Ringkolben für einen Nehmerzylinder mit einer Fläche von 800 mm² - 2500 mm².

EP 1 850 027 A2

**Beschreibung**

Die Erfindung betrifft ein hydraulisches System, insbesondere für Kraftfahrzeuge, umfassend einen Geberzylinder, zumindest bestehend aus einem Gehäuse mit einem darin axial verlagerbaren und gegen dieses Gehäuse abgedichteten Kolben und einem Druckmittelauslass sowie einem Nehmerzylinder, zumindest bestehend aus einem Gehäuse mit einem darin axial verlagerbaren, gegen dieses Gehäuse abgedichteten Kolben und einem Druckmitteleinlass sowie eine den Druckmitteleinlass und den Druckmittelauslass hydraulisch wirksam verbindende Druckmittelleitung sowie ein Druckmedium zur Befüllung des hydraulischen Systems.

Derartige hydraulische Systeme werden insbesondere in Kraftfahrzeugen als Vorrichtungen zur Betätigung von Reibungskupplungen, beispielsweise im Kraftfluss zwischen einer Brennkraftmaschine und einem Getriebe und/oder einer Elektromaschine und einem Antriebsstrang verwendet. Dabei wird in der Regel eine Linearbewegung über einen hydraulischen Zylinder als Geberzylinder vom Fahrer oder einer automatisch angesteuerten Aktorik in Abhängigkeit von der Fahrsituation durch eine Übertragung des im Geberzylinder mittels des Geberzylinderkolbens erzeugten Drucks in der mit Druckmittel oder Druckmedium befüllten Druck- und Nehmerzylinder verbindenden Leitung auf den Nehmerzylinder übertragen, der die gewünschte Wirkung, beispielsweise die Betätigung einer Kupplung oder dergleichen, durch eine durch den Druck induzierte Linearbewegung des Nehmerzylinderkolbens gegenüber dem ortsfest montierten Nehmerzylindergehäuse ausführt. Ein derartiges hydraulisches System wird auch als hydraulisches Ausrücksystem bezeichnet.

Hydraulische Ausrücksysteme können, wie im vorliegenden Fall, hydrostatische Systeme sein, in denen das beispielsweise für einen Kupplungsausrückvorgang benötigte Ölvolumen in dem geschlossenen System konstant bleibt. Zum Konstanthalten des Ölvolumens in der hydraulischen Strecke, in der leichte Leckverluste beispielsweise durch Ausdehnungen in den Verbindungsleitungen oder Leckstellen auftreten, wird dieses geringe Verlustvolumen über einen Ausgleichsbehälter ausgeglichen. Die Übertragung einer eingeleiteten Kraft (Pedal- oder Motorkraft) von einem Betätigungsglied (Pedal) oder einer Betätigungseinrichtung auf die Kupplung erfolgt im Wesentlichen über die entsprechenden Druckflächen der Kolben von Geber- und Nehmerzylinder im hydraulischen System. Dabei werden bei den eingesetzten Nehmerzylindern zwei verschiedene Arten unterschieden. Einmal kann es sich um einen Nehmerzylinder handeln, der konzentrisch um die Getriebeeingangswelle angeordnet ist (Conzentric-Slave-Cylinder; abgekürzt CSC) und aus dieser Position eine Ausrückkraft auf die Kupplung ausübt, und andererseits um einen Nehmerzylinder, der über einen Hebelmechanismus die Ausrückkraft auf die Kupplung überträgt.

Die Gesamtsteifigkeit eines hydraulischen Ausrücksystems setzt sich aus den verschiedenen Einzelsteifigkeiten der in der hydraulischen Strecke befindlichen Bauteile zusammen, wobei die Steifigkeit als eine Größe definiert ist, die den Zusammenhang zwischen einer Last, die auf einen Körper einwirkt und dessen dabei erfolgter Verformung beschreibt. Die Steifigkeit eines Körpers oder Bauteils ist von dessen Werkstoff sowie seiner Geometrie abhängig. Bezogen auf diese Aussage ist im Wesentlichen die Auslegung der Kolbenflächen für Geber- und Nehmerzylinder bzw. für CSC's letztendlich bestimmend für die Gesamtsteifigkeit des Systems. Die Einzelsteifigkeiten stellen jedoch auch Verlustquellen für den von einem Pedal zu übertragenden Druck und der Länge des Ausrückweges zur Kraftbeaufschlagung beispielsweise einer Kupplung dar. Mit den heutigen im Pkw- Bereich standardmäßig eingesetzten Kolben bzw. deren Druckflächen (für Geberzylinder 198mm² bzw. 285mm², für CSC's 585 mm² bis 775 mm² und für Nehmerzylinder 360 - 400mm²) ergibt sich eine Steifigkeit $C_0$, die auch als Basissteifigkeit bezeichnet wird. Diese Basissteifigkeit wird außerdem noch beeinflusst von den für die einzelnen Bauteile in der hydraulischen Strecke verwendeten Materialien. Die erwähnten Abmessungen für die Kolbenflächen, die derzeit in Kupplungsbetätigungssystemen eingesetzt werden, basieren dabei aus Kostengründen aus dem für Bremssysteme gängigen Standardgrößen für Kolbenflächen. Die Bauraumverhältnisse im Motorraum ließen es bisher ebenfalls zu, diese Standardgrößen in Kupplungsbetätigungssystemen einzusetzen. Die mit diesen standardisierten Kolbenflächen erzielbare Steifigkeit $C_0$ des gesamten hydraulischen Systems lässt es jedoch nicht zu, Ausdehnungen infolge beispielsweise durch Druck- oder Temperaturerhöhungen in der hydraulischen Strecke zu reduzieren, was sich jedoch sehr nachteilig auf die Länge des Kraftübertragungsweges und die aufzubringende Kraft selbst auswirkt.

Um die Ausdehnungen in der hydraulischen Strecke zu reduzieren, muss die Gesamtsteifigkeit des Systems erhöht werden, was beispielsweise durch den Einsatz von Materialien mit höherer Steifigkeit für die einzelnen Bauteile erreicht werden könnte oder durch eine Vergrö-βerung der jeweiligen Wandstärken erreicht werden könnte. Eine Optimierung des Geber- oder Nehmerzylinders bezüglich seiner Steifigkeit führt jedoch zu einer Erhöhung des Drucks in der hydraulischen Strecke, was sich wiederum nachteilig auf deren Lebensdauer auswirkt.

Daher ist es Aufgabe der Erfindung, die Verluste in der hydraulischen Strecke zur Kupplungsbetätigung durch Erhöhung der Steifigkeit des Gesamtsystems zu reduzieren, wobei die während der Kupplungsbetätigung auftretenden Druckverhältnisse verringert oder zumindest beibehalten werden sollen.

Diese Aufgabe wird mit den Merkmalen der Ansprüche 1, 4 und 6 gelöst.

Bei einem hydraulisches System, insbesondere für Kraftfahrzeuge, umfassend einen Geberzylinder mit einem Gehäuse und einem darin axial verlagerbaren und gegen dieses Gehäuse abgedichteten Kolben, der eine spezifische Einzelsteifigkeit aufweist und einem Druckmittelauslass, sowie einem Nehmerzylinder, der als ein ringförmiger, konzentrisch um die Getriebeeingangswelle angeordneter Nehmerzylinder (Concentric Slave Cylinder) CSC ausgebildet sein kann, mit einem Gehäuse und einem darin axial verlagerbaren, gegen dieses Gehäuse abgedichteten Kolben, der ebenfalls eine spezifische Einzelsteifigkeit aufweist und einem Druckmitteleinlass, sowie eine den Druckmitteleinlass und den Druckmittelauslass hydraulisch wirksam verbindende Druckmittelleitung, wobei diese Bauteile und deren Komponenten jeweils spezifische Einzelsteifigkeiten aufweisen, deren Summe eine Gesamtsteifigkeit des hydraulischen Systems definiert, kann diese Gesamtsteifigkeit erhöht werden durch die Verwendung von Kolben für Geberzylinder mit einer Fläche von $300mm^2$-$1000mm^2$ und durch die Verwendung von Kolben für einen CSC mit einer Fläche von $800\ mm^2$-$2500\ mm^2$.

Eine vorteilhafte Ausgestaltung der Erfindung sieht vor, die Gesamtsteifigkeit des Ausrücksystems durch Verwendung von Kolben für Geberzylinder mit einer Fläche von $350mm^2$ - $500mm^2$ und durch die Verwendung von Kolben für einen CSC mit einer Fläche von $1000\ mm^2$-$1500\ mm^2$ zu erhöhen.

Ausgehend von den obigen Betrachtungen im Stand der Technik, wird in überraschender Weise festgestellt, dass durch eine Vergrößerung der Kolbenflächen eine Erhöhung der Gesamtsteifigkeit des Ausrücksystems erzielt werden kann. Zu erwarten wäre eine geringe Steifigkeit, da bei gleichem Druck sich durch die großen Kolbenflächen zwangsläufig auch vergrößerte Druckanstiegsflächen am Gehäuse nicht zu vermeiden sind. Allerdings hat sich in der Umsetzung dieser Lösung gezeigt, dass durch die Vergrößerung der Kolben- und damit der Druckflächen von Geber- und Nehmerzylinder im Vergleich zu heutigen Systemen und bei gleichem Druckniveau zwar zunächst das Verlustvolumen vergrößert und damit die Steifigkeiten der Bauelemente druckbezogen reduziert werden. Gleichzeitig kann jedoch auch der Systemdruck verringert wird, wodurch wiederum die Steifigkeit des Gesamtsystems erhöht wird.

Daraus ist erkennbar, dass ein proportionaler Zusammenhang zwischen der Vergrößerung der Kolbenflächen und der Gesamtsteifigkeit des Ausrücksystems besteht.

Die Aufgabe wird ebenfalls dadurch gelöst mit einem hydraulisches System, insbesondere für Kraftfahrzeuge, umfassend einen Geberzylinder mit einem Gehäuse und einem darin axial verlagerbaren und gegen dieses Gehäuse abgedichteten Ringkolben mit einem Druckmittelauslass, sowie einem Nehmerzylinder, der als ein ringförmiger, konzentrisch um die Getriebeeingangswelle angeordneter Nehmerzylinder (Concentric Slave Cylinder) CSC ausgebildet sein kann, mit einem Gehäuse und einem darin axial verlagerbaren, gegen dieses Gehäuse abgedichteten Kolben und einem Druckmitteleinlass, sowie eine den Druckmitteleinlass und den Druckmittelauslass hydraulisch wirksam verbindende Druckmittelleitung, wodurch ein von einem Stellglied, beispielsweise einem Pedal, eingeleitete Kraft zum Ausrücken einer Kupplung übertragen wird, indem sich bei Verwendung von Kolben für Geberzylinder mit einer Fläche von $350mm^2$ - $500mm^2$, vorzugsweise von $300mm^2$ - $1000mm^2$ und durch die Verwendung von Ringkolben für den Nehmerzylinder mit einer Fläche von $1000\ mm^2$ - $1500\ mm^2$, vorzugsweise von $800\ mm^2$ - $2500\ mm^2$, die Übertragungsverluste in der hydraulischen Strecke verringern, wodurch sich ebenfalls die Ausrückkraft verringert.

Von besonderem Vorteil ist, dass sich durch die Vergrößerung der Kolbenflächen die Auskuppelreserve erhöht. Unter Auskuppelreserve wird der Weg des Geberzylinderkolbens verstanden, der von einer kraftfreien Nulllage bis zum ersten Ansprechen der Kupplung zurückgelegt wird.

Die Aufgabe wird ebenfalls gelöst durch ein hydraulisches System, insbesondere für Kraftfahrzeuge, umfassend einen Geberzylinder mit einem Gehäuse und einem darin axial verlagerbaren und gegen dieses Gehäuse abgedichteten Kolben mit einem Druckmittelauslass, sowie einem Nehmerzylinder, der als ein ringförmiger, konzentrisch um die Getriebeeingangswelle angeordneter Nehmerzylinder (Concentric Slave Cylinder) CSC ausgebildet sein kann, mit einem Gehäuse und einem darin axial verlagerbaren, gegen dieses Gehäuse abgedichteten Kolben und einem Druckmitteleinlass, sowie eine den Druckmitteleinlass und den Druckmittelauslass hydraulisch wirksam verbindende Druckmittelleitung, wodurch ein von einem Stellglied, beispielsweise einem Pedal, eingeleitete Kraft (Pedalkraft) zum Ausrücken einer Kupplung übertragen wird, indem sich bei Verwendung von Kolben für Geberzylinder mit einer Fläche von $350mm^2$ - $500mm^2$, vorzugsweise von $300mm^2$ - $1000mm^2$ und durch die Verwendung von Kolben für einen CSC mit einer Fläche von $1000\ mm^2$- $1500\ mm^2$, vorzugsweise von $800\ mm^2$ - $2500\ mm^2$ die Übersetzung im Ausrücksystem verändert, wodurch die Pedalkraft um 7%, vorzugsweise 8% reduziert werden kann.

Die Erfindung soll nachfolgend anhand eines Ausführungsbeispiels näher erläutert werden.

Es zeigen:

Figur 1 eine schematische Darstellung eines Ausrücksystems anhand eines Ausführungsbeispiels einer Kupplungsausrückvorrichtung,

Figur 2a Einzelverluste anhand eines konzentrisch um die Getriebeeingangswelle angeordneten Nehmerzylinders (CSC's) in Schnittdarstellung

Figur 2b Einzelverluste anhand eines CSC's in perspektivischer Darstellung,

Figur 3a     Einzelverluste anhand eines semihydraulischen Ausrücksystems, wobei der Geberzylinder im Schnitt dargestellt ist,

Figur 3b     Einzelverluste anhand eines semihydraulischen Ausrücksystems, wobei der Geberzylinder perspektivisch dargestellt ist,

Fig. 4     eine Verdeutlichung der Einzelverluste bei einem hydraulischen Ausrücksystem gemäß dem Stand der Technik

Fig. 5 bis 9     die Verlustreduzierung mittels der erfindungsgemäßen Lösung im hydraulischen Ausrücksystem.

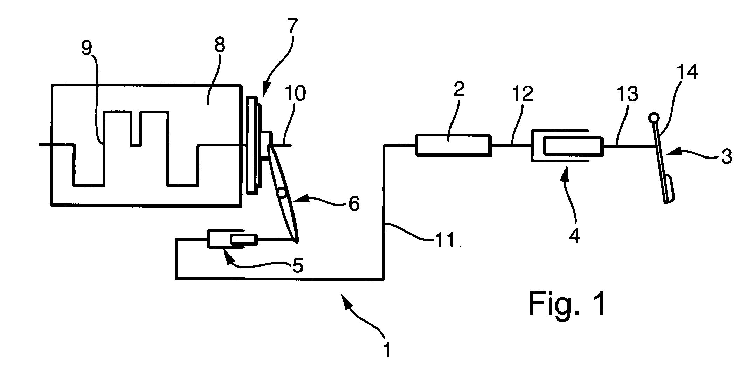

Figur 1 zeigt in schematischer Darstellung eine mögliche Ausgestaltung eines hydraulischen Systems 1 mit einem Druckbegrenzungsventil 2 anhand einer Kupplungsausrückvorrichtung 3 mit einem Geberzylinder 4 und einem Nehmerzylinder 5. Das Druckbegrenzungsventil 2 ist in dem gezeigten Ausführungsbeispiel zwischen die Leitungsstränge 11 und 12 eingebaut. Es versteht sich, dass in anderen Ausführungsbeispielen das Druckbegrenzungsventil 2 entweder in den Geberzylinder 4 oder in den Nehmerzylinder 5 integriert sein kann.

Das Kupplungsausrücksystem 3 betätigt die Kupplung 7 hydraulisch durch Beaufschlagung des Geberzylinders 4 mittels eines Betätigungsgliedes 14, das ein Fußpedal, ein Aktor, beispielsweise ein elektrischer Aktor, oder dergleichen sein kann. Hierdurch wird mittels einer mechanischen Übertragung 13 Druck im Geberzylinder 4 aufgebaut, der über den Leitungsstrang 12, über das Druckbegrenzungsventil 2 und den Leitungsstrang 11 einen Druck im Nehmerzylinder 5 aufbaut. Der Nehmerzylinder 5 kann entgegen der in Figur 1 gezeigten Ausführung konzentrisch um die Getriebeeingangswelle 10 angeordnet sein (CSC) und sich axial an einem nicht dargestellten Getriebegehäuse abstützen und die nötige Ausrückkraft über ein Ausrücklager auf die Kupplung 7 bzw. an deren Ausrückelementen, wie Tellerfeder (nicht dargestellt), aufbringen. Mittels eines in hydraulischer Verbindung mit dem Geberzylinder 4 stehenden, im Nehmerzylindergehäuse untergebrachten Kolbens wird die Ausrückmechanik 6 axial mit Druck beaufschlagt. Zum Aufbringen der Ausrückkraft ist der Nehmerzylinder 5 jeweils gehäusefest am Getriebegehäuse, das hier nicht näher dargestellt ist, oder an einem anderen gehäusefesten Bauteil angebracht. Die Getriebeeingangswelle überträgt bei geschlossener Kupplung 7 das Drehmoment der Brennkraftmaschine 8 auf ein Getriebe und anschließend auf die Antriebsräder eines Kraftfahrzeuges.

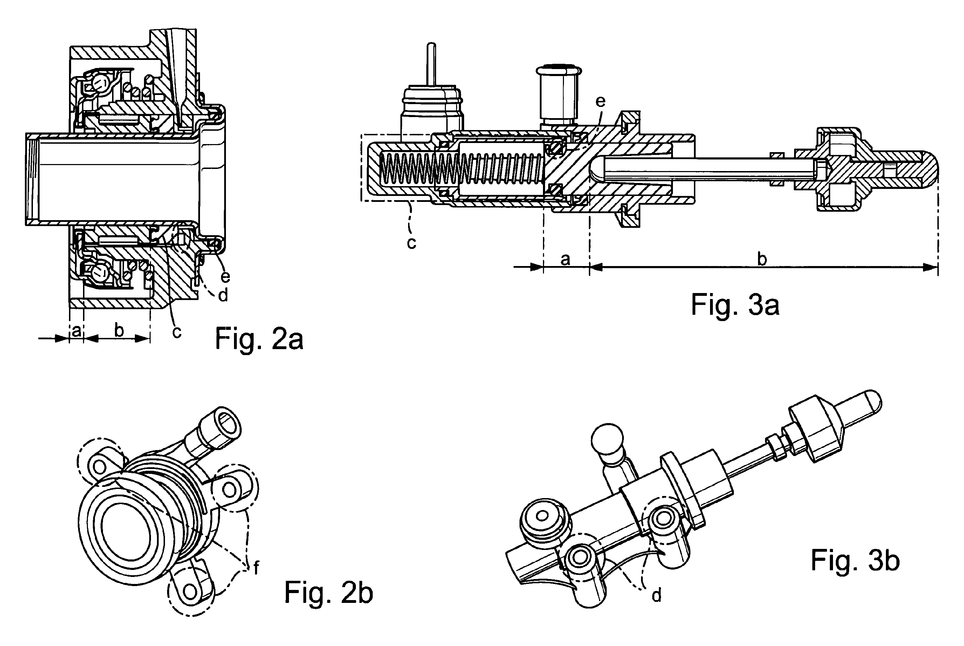

In den Figuren 2a bis 3b sind die in der hydraulischen Strecke zur Kupplungsbetätigung erforderlichen Bauteile schematisch dargestellt. Dabei sind die Stellen an den Bauteilen hervorgehoben, die aufgrund der an dieser Stelle eingesetzten Bauelemente mit ihren jeweiligen spezifischen Einzelsteifigkeiten die Gesamtsteifigkeit dieses hydraulischen Systems beeinflussen. Die Figur 2a zeigt einen als CSC ausgebildeten Nehmerzylinder, der im Wesentlichen aus einem Gehäuse besteht, das eine Ausnehmung zur Durchdringung einer Getriebeeingangswelle aufweist, deren Größe durch eine mit diesem Gehäuse verbundene Führungshülse definiert wird. Zwischen dieser Führungshülse und dem Gehäuse ist ein Ringkolben angeordnet. Über einen im Gehäuse vorgesehenen Druckmittelanschluss, der in diesen Zwischenraum einmündet, ist der Ringkolben mit Druck beaufschlagbar und somit in dem Zwischenraum, der gleichzeitig einen Druckraum bildet, axial verschiebbar, wodurch ein Lagerring eines endseitig im Gehäuse eingebrachten Ausrücklagers ebenfalls axial verlagerbar ist und damit die Tellerfeder der Kupplung betätigt werden kann. Die Figuren 2a und 2b zeigen ein CSC mit den sich durch die entsprechenden Bauelemente definierten Einzelsteifigkeiten des Ausrücklagers $a_1$), des Kolbens $b_1$), der Formdichtung $c_1$), dem dünnwandigen Rohr $d_1$) der Führungshülse, dem O-Ring $e_1$) sowie der Schnittstelle zum Getriebe $f_1$). In der Figur 2a ist das CSC im Schnitt und in der Figur 2b perspektivisch dargestellt, aus der die Befestigungsstellen erkennbar sind. Die Einzelsteifigkeiten $a_1$), $b_1$) und $f_1$) werden von einer Änderung - speziell einer Vergrößerung - des Außendurchmessers des Zylinderraumes und damit des Kolbendurchmessers nicht beeinflusst und somit auch nicht von der erfindungsgemäßen Lösung. Aus diesem Grunde bleibt der Anteil dieser Einzelsteifigkeiten am Gesamtverlust der Systemsteifigkeit konstant. Wird der Außendurchmesser des Zylinderraumes proportional zur zum Durchmesser der Kolbenfläche vergrößert, reduziert sich jedoch die Einzelsteifigkeit $d_1$). Die damit ebenfalls einhergehenden Reduzierungen der beiden Einzelsteifigkeiten $c_1$) und $e_1$) werden hinzu addiert. Ihr Anteil am Gesamtverlust der Systemsteifigkeit beträgt erfahrungsgemäß ca. 50 % und verhält sich proportional zur Dichtungslänge.

Aus den Figuren 3a und 3b ist ein Geberzylinder 4 mit den spezifischen Einzelsteifigkeiten des Kolbens $a_2$), der Kolbenstange $b_2$), dem dünnwandigen Rohr $c_2$) der Führungshülse, der Formdichtung $e_2$) und der Schnittstelle zum Pedalbock bzw. zum Getriebe $d_2$), wobei die Figur 3a eine Schnittdarstellung und Figur 3b eine perspektivische Darstellung des Geberzylinders 4 ist. Der Kolben mit der Einzelsteifigkeit $a_2$) wird in einem dünnwandigen Rohr mit der Einzelsteifigkeit $c_2$) geführt. Die Dichtung mit der Einzelsteifigkeit $e_2$) dichtet den Druckraum zu einem Nachlaufbehälter ab. An den Befestigungsstellen, die die Einzelsteifigkeiten $d_2$) aufweisen, ist der Geberzylinder 4 mit einem nicht dargestellten Pedalbock verbunden. Die an den Stellen $b_2$) bis $d_2$) auftretenden Einzelverluste werden bei einer Änderung des Kolbendurchmessers nicht mit verändert und werden daher von der erfindungsgemäßen Lösung nicht erfasst. Ihr Beitrag zum Gesamtverlust des Systems bleibt daher konstant.

Für die Einzelsteifigkeit $c_2$) gilt die gleiche Aussage wie für die Einzelsteifigkeit $d_1$) beim CSC. Die Ein-

zelsteifigkeit e2) ist proportional zur Dichtungslänge und damit bei gleicher Dichtungsgeometrie proportional zum Durchmesser des jeweiligen Zylinders, da die gleichen Einzelverluststellen auch für einen Nehmerzylinder 5 gelten.

Bei dieser Betrachtung wurde die Gesamtsteifigkeit des Geberzylinders 4 bzw. des Nehmerzylinders 5 proportional zum Zylinderdurchmesser angenommen.

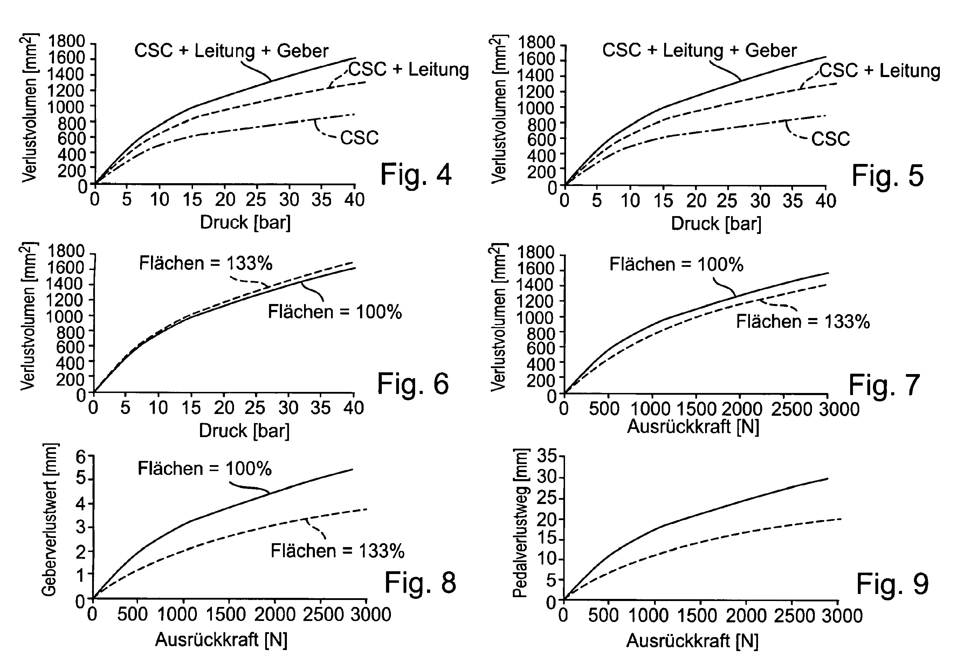

Der Beschreibung der Figuren 4 bis 9 soll zunächst vorausgehen, welcher Ansatz der Erfindung zugrunde zu legen ist. Diese Formeln beschreiben die Steifigkeit der einzelnen Zylinder (Geber- und Nehmerzylinder) in der hydraulischen Strecke, ausgehend von einer Basissteifigkeit, woraus der Einfluss der Wahl des Durchmessers für den jeweiligen Zylinder und damit auch für den Kolben deutlich sichtbar wird.

Für einen konzentrisch um die Getriebeeingangswelle angeordneten Nehmerzylinder ergibt sich:

$$C(Da) = \frac{C_0}{2} \cdot \left(1 + \frac{Da_0 + Di_0}{Da + Di_0}\right)$$

Die Steifigkeit des Geber- bzw. Nehmerzylinders berechnet sich wie folgt:

$$C(Da) = C_0 \cdot \frac{Da_0}{Da}$$

wobei

$C_0$ = Basissteifigkeit definiert als die Steifigkeit des hydraulischen Systems gemäß dem Stand der Technik
Da = Außendurchmesser
$Da_0$ = Außendurchmesser des Standes der Technik
Di = Innendurchmesser
$Di_0$ = Innendurchmesser des Standes der Technik

Aus diesen Ansätzen geht hervor, dass bei größer werdendem Außendurchmesser die Einzelsteifigkeit abnimmt. Das würde bedeuten, dass ebenfalls die Gesamtsteifigkeit des Systems abnimmt. Dies ist jedoch nicht der Fall - im Gegenteil, die Gesamtsteifigkeit des Systems wird durch eine Vergrößerung des Kolbendurchmessers erhöht, da, gleiche Kraftverhältnisse vorausgesetzt, durch diese konstruktive Maßnahme der Flächendruck reduziert wird und dadurch das System insgesamt steifer wird. Bei dieser Betrachtung wurden die Steifigkeiten der Leitungen 11 und 12 nicht mit berücksichtigt.

Eine weitere Betrachtungsweise ist die, dass die Einzelsteifigkeit eines Bauteils den Zusammenhang zwischen der Volumenaufnahme und dem Druck beeinflusst, der letztendlich im Verlustweg an dieser Stelle für das Ausrücksystem zum Ausdruck kommt. Die Volumenaufnahme von Geber- und Nehmerzylinder wird unter anderem von der in diese eingesetzten dynamischen Dichtung sehr wesentlich beeinflusst. Beispielsweise verbleibt bei einem CSC ein Freiraum zwischen dieser dynamischen Dichtung und der Zylinderwand. Dieser Freiraum bildet mit der Dichtungslänge ein Volumen. Wird der Zylinder mit Druck beaufschlagt, so wird dieser Freiraum zunächst von der Dichtung aufgefüllt. Das dabei verdrängte Volumen an Druckmittel stellt einen Wegverlust des Geberzylinders dar. Die Dichtung selbst kann als nahezu inkompressibel betrachtet werden. Zwischen der Volumenaufnahme und der Dichtungslänge wird ein proportionaler Zusammenhang gesehen. Daraus folgt, dass eine Vergrößerung der Kolbenflächen eine Vergrößerung der Volumenaufnahme zur Folge hat. Außerdem wird damit die Steifigkeit von Geber- und Nehmerzylinder zunächst herabgesetzt und die Volumenaufnahme erhöht. Die Eingangsgröße für das Gesamtsystem ist jedoch nicht der Druck, sondern die Ausrückkraft der Kupplung. Bei einer Vergrößerung der Kolbenflächen sinkt somit der Druck im System. Wird jedoch nicht die Volumenaufnahme über dem Systemdruck betrachtet, sondern der Verlustweg am Kupplungspedal über der Ausrückkraft, ergibt sich durch die Vergrößerung der Kolbenflächen eine Reduzierung des Verlustweges am Kupplungspedal gegenüber dem Stand der Technik.

Die Figuren 4 bis 9 verdeutlichen diese Reduzierung des Verlustweges für ein Ausrücksystem durch die Verwendung von Zylindern mit vergrößerten Kolbenflächen.

Aus der Figur 4 sind beispielhaft gemäß dem Stand der Technik die Einzelverluste an einem CSC, den Leitungen 11,12 und einem Geberzylinder 4 ersichtlich.

Die Figur 5 zeigt die Einzelverluste für ein Ausrücksystem gleicher Bauart mit beispielhaft um 33 % vergrößerten Kolbenflächen, das heißt, die hydraulische Übersetzung bleibt konstant.

Aus der Figur 6 ist der Vergleich der Gesamtverluste des Systems mit vergrößerten Kolbenflächen mit denen des Basissystems gemäß dem Stand der Technik ersichtlich. Hierbei wird deutlich, dass die druckbezogenen Verluste durch eine Vergrößerung der Kolbenfläche ebenfalls größer geworden sind.

Aus dem Vergleich (s. Figur 7) der Verluste anhand des Systems gemäß dem Stand der Technik und des Systems mit den vergrößerten Kolbenflächen, bezogen auf die Ausrückkraft geht hervor, dass die Verluste durch die Flächenvergrößerung verringert werden konnten.

Der wesentliche Vorteil dieser erfindungsgemäßen Lösung wird jedoch bei einer geberweg-(s. Figur 8) oder pedalwegbezogenen (s. Figur 9) Darstellung deutlich. Die ausrücksystemseitige Verlustreduzierung beträgt in dem hier gezeigten Beispiel 30 %, womit in erster Näherung ein proportionaler Zusammenhang zwischen Steifigkeit und Vergrößerung der Kolbenflächen erkennbar ist. Bei einer Ausrückkraft von zum Beispiel 2000 N erhöht sich dadurch die Auskuppelreserve um ca. 8 mm. Dieser Vorteil kann auch zur Kraftreduzierung durch eine Erhöhung der Ausrücksystemübersetzung genutzt werden. Für das hier gezeigte Beispiel ist eine Reduzierung der Pedalkraft um ca. 7 % bis 8 % möglich.

## Bezugszeichenliste

1    Hydraulisches System
2    Druckbegrenzungsventil
3    Kupplungsausrückvorrichtung
4    Geberzylinder
5    Nehmerzylinder
6    Ausrückmechanik
7    Kupplung
8    Brennkraftmaschine
9    Kurbelwelle
10   Getriebeeingangswelle
11   Leitungsstrang
12   Leitungsstrang
13   Mechanische Übertragung
14   Betätigungsglied

die spezifischen Einzelsteifigkeiten am Nehmerzylinder:

a1$_)$    Ausrücklager
b1$_)$    Kolben mit Dichtringträger
c1$_)$    Formdichtung
d1$_)$    Dünnwandiges Rohr
e1$_)$    O-Ring
f1$_)$    Schnittstelle zum Getriebe

die spezifischen Einzelsteifigkeiten am Geberzylinder:

a2$_)$    Kolben
b2$_)$    Kolbenstange
c2$_)$    dünnwandiges Rohr
d2$_)$    Schnittstelle zum Pedalbock bzw. zum Getriebe
e2$_)$    Formdichtung

## Patentansprüche

1. Hydraulisches System, insbesondere für Kraftfahrzeuge, umfassend einen Geberzylinder (4) mit einem Gehäuse und einem darin axial verlagerbaren und gegen dieses Gehäuse abgedichteten Kolben mit einer spezifischen Einzelsteifigkeit (a2$_)$) und einem Druckmittelauslass, sowie einem Nehmerzylinder (5), der als ein ringförmiger, konzentrisch um die Getriebeeingangswelle angeordneter Nehmerzylinder (Concentric Slave Cylinder) CSC (5) ausgebildet sein kann, mit einem Gehäuse und einem darin axial verlagerbaren, gegen dieses Gehäuse abgedichteten Ringkolben mit einer spezifischen Einzelsteifigkeit (b1$_)$) und einem Druckmitteleinlass, sowie eine den Druckmitteleinlass und den Druckmittelauslass hydraulisch wirksam verbindende Druckmittelleitung, wobei diese Bauteile und deren Komponenten jeweils eine spezifische Einzelsteifigkeit (a1$_)$ bis f1$_)$; a2$_)$ bis e2$_)$) aufweisen, deren Summe eine Gesamtsteifigkeit bzw. Basissteifigkeit $C_0$ des hydraulischen Systems definiert, **dadurch gekennzeichnet, dass** diese Basissteifigkeit $C_0$ erhöht wird durch die Verwendung von Kolben für Geberzylinder (4) mit einer Fläche von 300mm$^2$ - 1000mm$^2$ und durch die Verwendung von Ringkolben für den Nehmerzylinder (5) mit einer Fläche von 800 mm$^2$- 2500 mm$^2$.

2. Hydraulisches System nach Anspruch 1, **dadurch gekennzeichnet, dass** die Basissteifigkeit $C_0$ durch die Verwendung von Kolben für Geberzylinder (4) mit einer Fläche von 350mm$^2$ - 500mm$^2$ und durch die Verwendung von Ringkolben für Nehmerzylinder (5) mit einer Fläche von 1000 mm$^2$- 1500 mm$^2$erhöht wird.

3. Hydraulisches System nach den Ansprüchen 1 oder 2, **dadurch gekennzeichnet, dass** zwischen der Gesamtsteifigkeit und der Vergrößerung der Kolbenflächen ein proportionaler Zusammenhang besteht.

4. Hydraulisches System, insbesondere für Kraftfahrzeuge, umfassend einen Geberzylinder (4) mit einem Gehäuse und einem darin axial verlagerbaren und gegen dieses Gehäuse abgedichteten Kolben mit einem Druckmittelauslass, sowie einem Nehmerzylinder (5), der als ein ringförmiger, konzentrisch um die Getriebeeingangswelle angeordneter Nehmerzylinder (5) ausgebildet sein kann, mit einem Gehäuse und einem darin axial verlagerbaren, gegen dieses Gehäuse abgedichteten Ringkolben und einem Druckmitteleinlass, sowie eine den Druckmitteleinlass und den Druckmittelauslass hydraulisch wirksam verbindende Druckmittelleitung, wodurch ein von einem Stellglied eingeleitete Kraft zum Ausrükken einer Kupplung übertragen wird, **dadurch gekennzeichnet, dass** sich bei Verwendung von Kolben für Geberzylinder (4) mit einer Fläche von 350mm$^2$-500mm$^2$, vorzugsweise von 300mm$^2$-1000mm$^2$ und durch die Verwendung eines Ringkolbens für einen Nehmerzylinder (5) mit einer Fläche von 1000 mm$^2$- 1500 mm$^2$, vorzugsweise von 800 mm$^2$- 2500 mm$^2$, die Übertragungsverluste in der hydraulischen Strecke verringern, wodurch sich ebenfalls die Ausrückkraft verringert.

5. Hydraulisches System nach Anspruch 4, **dadurch gekennzeichnet, dass** sich durch die Vergrößerung der Kolbenflächen die Auskuppelreserve erhöht.

**6.** Hydraulisches System, insbesondere für Kraftfahrzeuge, umfassend einen Geberzylinder (4) mit einem Gehäuse und einem darin axial verlagerbaren und gegen dieses Gehäuse abgedichteten Kolben mit einem Druckmittelauslass, sowie einem Nehmerzylinder (5), der als ein ringförmiger, konzentrisch um die Getriebeeingangswelle angeordneter Nehmerzylinder (5) ausgebildet sein kann, mit einem Gehäuse und einem darin axial verlagerbaren, gegen dieses Gehäuse abgedichteten Ringkolben und einem Druckmitteleinlass, sowie eine den Druckmitteleinlass und den Druckmittelauslass hydraulisch wirksam verbindende Druckmittelleitung, wodurch ein von einem Stellglied, beispielsweise einem Pedal, eingeleitete Kraft (Pedalkraft) zum Ausrücken einer Kupplung übertragen wird, **dadurch gekennzeichnet, dass** sich bei Verwendung von Kolben für Geberzylinder (4) mit einer Fläche von 350mm$^2$ - 500mm$^2$, vorzugsweise von 300mm$^2$ - 1000mm$^2$ und durch die Verwendung von Kolben für einen CSC (5) mit einer Fläche von 1000 mm$^2$- 1500 mm$^2$, vorzugsweise von 800 mm$^2$- 2500 mm$^2$ die Übersetzung im Ausrücksystem verändert, wodurch die Pedalkraft um 7%, vorzugsweise 8% reduziert werden kann.

Fig. 1

Fig. 3a

Fig. 3b

Fig. 2a

Fig. 2b

Fig. 4

Fig. 5

Fig. 6

Fig. 7

Fig. 8

Fig. 9